# DEMANDE DE BREVET EUROPEEN

(11) **EP 1 317 987 A1**
(43) Date de publication de la demande: **11.06.2003**
(21) Numéro de dépôt: 02293013.5
(22) Date de dépôt: 06.12.2002
(51) Int. Cl.: B23K 10/02, B23P 15/00

(54) **Procédé de fabrication d'un anneau aubage**

(30) Priorité: 06.12.2001 FR 0115757
(71) Demandeur: SNECMA MOTEURS, 75015 Paris (FR)
(72) Inventeur: Gueldry, Gérard Michel Roland, 91000 Evry (FR); Naudet, Jacky, 91070 Bondoufle (FR)

(57) **Abrégé**

Une virole extérieure d'un anneau d'aube (1) est fabriquée par dépôt d'une ébauche (13) par un procédé de plasmaformage sur une monture (7) qui est ensuite retirée. Les bouts des pales sont bien encastrés dans la virole quel que soit leur profil, si bien que les performances aérodynamiques ne sont pas dégradées.

## Description

Le sujet de cette invention est un procédé de fabrication d'un anneau aubagé, du genre composé de deux viroles concentriques et d'aubes intermédiaires les joignant.

Deux procédés principaux existent aujourd'hui pour unir les aubes aux viroles. Dans le premier, l'anneau sort d'une pièce de la fonderie et subit les usinages nécessaires pour ôter les surépaisseurs et ajuster les formes des aubes. La qualité de l'anneau est très bonne, mais la fabrication est délicate tant il est difficile d'éviter des déformations pendant l'usinage ; des contraintes pèsent sur le choix de la forme des aubes, qui doivent encore être de la même matière que les viroles ; enfin, des rayons de raccordement des aubes aux viroles subsistent et nuisent aux performances aérodynamiques.

Dans l'autre procédé principal, aubes et viroles sont fabriquées séparément, puis assemblées et brasées ; mais le brasage n'a qu'une résistance modérée et reste difficile à accomplir pour les aubes fortement voilées qu'on apprécie de plus en plus en raison de leurs bonnes performances ; enfin il faut s'assurer de la précision de l'assemblage et régler soigneusement les jeux entre les aubes et les viroles.

On peut encore mentionner un procédé complexe, comprenant un brasage et un frittage, utilisé dans ce domaine technique et décrit dans le brevet des Etat-Unis 5 732 468.

L'invention a trait à un procédé différent où, pour résumer, une des viroles au moins est formée par projection de plasma puis usinée à la forme définitive.

L'intérêt de cette disposition provient de ce que les contraintes et inconvénients mentionnés ci-dessus sont surtout présents au bout des aubes, alors qu'elles sont beaucoup moins importantes à leurs pieds. Il est alors facile de faire un premier assemblage de l'anneau en plaçant des tenons des aubes dans des entailles d'une virole de pieds d'aubes fabriquée séparément (et qui sera brasée au pied des aubes conformément à la technique connue, quand l'assemblage aura été complété) . Une monture est alors placée sur les bouts des aubes en les coiffant ; elle sert à les maintenir en place et à recevoir le plasma qui se dépose sur elle et forme une ébauche de virole. Un usinage est enfin entrepris pour façonner la virole à la forme souhaitée ; la monture peut être retirée par usinage ou autrement, ou demeurer en tant que portion de la virole.

La virole formée par projection de plasma s'ajuste sans difficulté au bout des aubes et forme un assemblage solide.

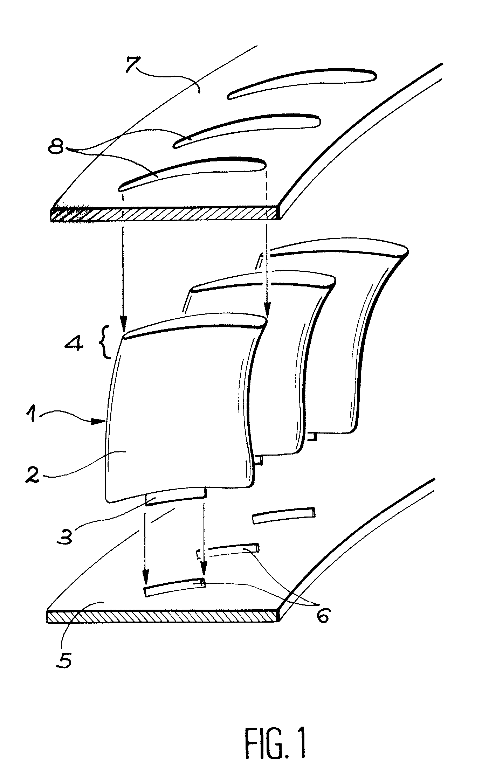

On va maintenant passer aux commentaires des figures 1, 2, 3, 4 et 5 pour une description détaillée d'un mode de réalisation préféré de l'invention.

A la figure 1, chaque aube 1 comprend, outre une partie principale de pale 2, un tenon 3 à son pied ; on peut aussi y distinguer une rehausse 4 qui n'en fera plus partie quand l'anneau sera construit. La rehausse 4 est opposée au pied 3.

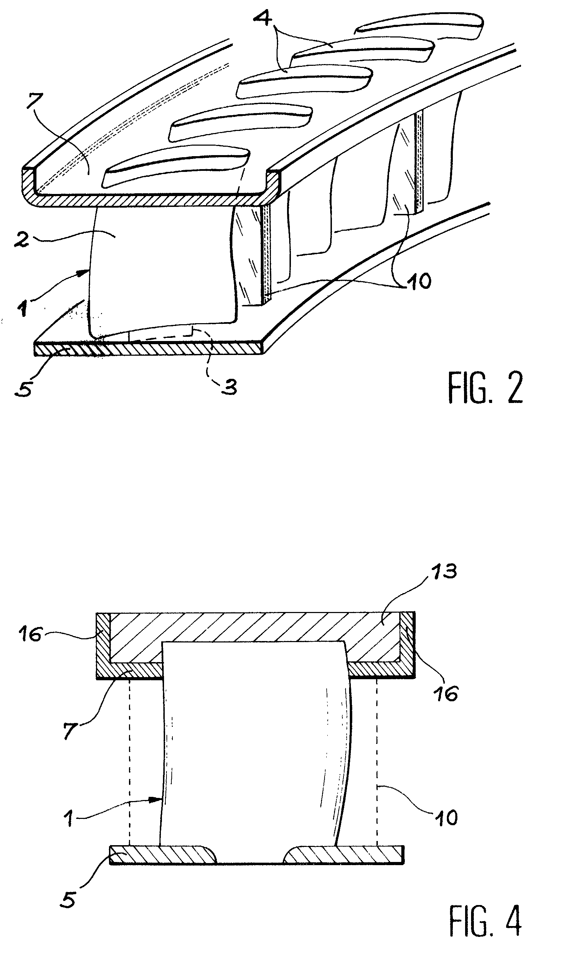

Les aubes 1 sont apportées à une virole intérieure 5 pourvue d'entailles 6. La première étape du procédé consiste à introduire les tenons 3 dans les entailles 6, puis une monture 7 composée de segments d'anneaux jointifs, et pourvue elle aussi d'entailles 8, est apportée et assemblée aux aubes 1 de manière à les coiffer en faisant entrer les rehausses 4 dans les entailles 8. L'ensemble est représenté à la figure 2. Des entretoises 10 sont introduites entre les aubes 1 pour maintenir l'écartement entre la virole intérieure 5 et les segments de la monture 7.

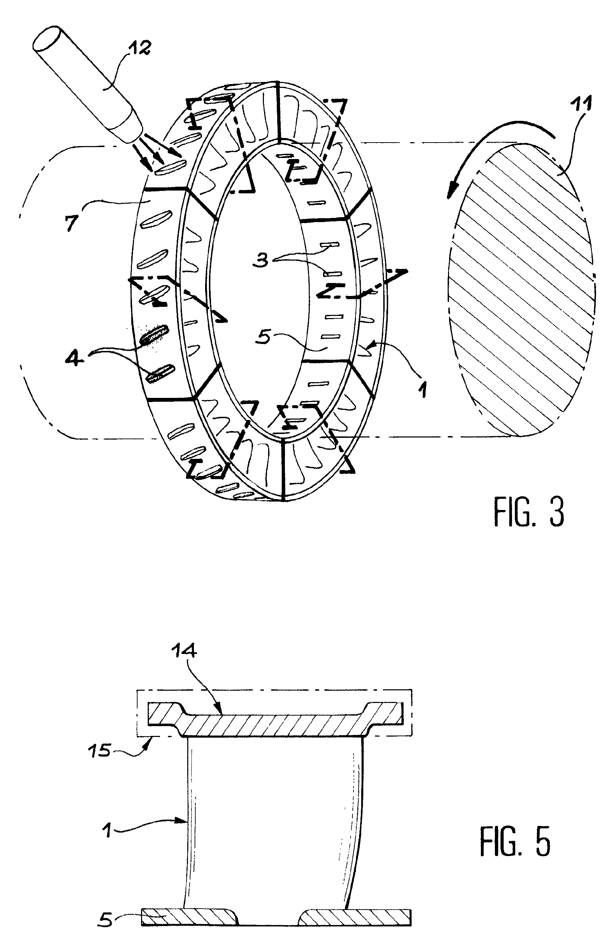

A la figure 3, l'assemblage, monté sur un outillage de support 11 d'un genre comprenant en particulier un moyeu tournant et des doigts d'accrochage, est déplacé devant une torche de métallisation 12 qui projette de la poudre métallique sous forme de plasma sur la monture 7 en enrobant les rehausses 4. Après quelques tours de l'outillage 12, une couche d'épaisseur suffisante a pu être déposée, qui forme une ébauche 13 à la figure 4. La monture 7 peut alors être retirée par usinage ou par un autre procédé, ainsi que les entretoises 10. Il est loisible de choisir une structure ou un matériau peu résistant pour la monture 7 afin de faciliter cet état.

La figure 5 illustre ensuite que l'ébauche 13 peut être usinée pour donner une virole extérieure 14 ayant la section voulue, la portion enlevée étant référencée par le nombre 15. L'usinage est effectué sur les flancs et à l'extérieur de l'ébauche 13, mais normalement pas à l'intérieur, afin de ne pas toucher aux aubes 1 et notamment à leurs raccordements à la virole extérieure 14 dont la forme est complexe. Un encastrement excellent des pales 2 dans la virole extérieure 14 est obtenu. Les exigences mécaniques et aérodynamiques aux pieds des aubes sont moins grandes, et le brasage des tenons 3 dans les entailles 6 donne un assemblage satisfaisant de l'anneau.

L'usinage peut être facilité si la monture 7 est concave et limitée par une paire de flancs 16 pour y contenir l'ébauche 13 ; la métallisation est alors arrêtée quand la concavité est pleine. Une ébauche plus régulière de la virole extérieure 14 est alors obtenue.

## Revendications

1. Procédé de fabrication d'un anneau aubagé composé de deux viroles (5, 14) concentriques et d'aubes (1) intermédiaires, joignant les viroles, consistant à emboîter des tenons (3) des aubes dans une des viroles, **caractérisé en ce qu'**il consiste ensuite à enserrer des extrémités des aubes opposées aux tenons dans une monture (7) annulaire, à déposer une ébauche (13) de l'autre des viroles par plasma sur la monture, et à usiner l'ébauche pour donner l'autre des viroles, la monture ayant été retirée.

2. Procédé selon la revendication 1, **caractérisé en ce que** la monture est pourvue d'une concavité annulaire de réception de l'ébauche de l'aube.

3. Procédé selon l'une quelconque des revendications 1 ou 2, **caractérisé en ce que** des entretoises (10) sont placées entre les aubes, sur la virole dans laquelle les tenons sont emboîtés et sous la monture.
